# EUROPÄISCHE PATENTSCHRIFT

(11) **EP 2 701 451 B1**
(45) Veröffentlichungstag und Bekanntmachung des Hinweises auf die Patenterteilung: **25.11.2020**
(21) Anmeldenummer: 13179665.8
(22) Anmeldetag: 08.08.2013
(51) Int. Cl.: H04W 84/12

(54) **HAUSGERÄTEANORDNUNG MIT KOMMUNIKATIONSMODUL SOWIE VERFAHREN**
DOMESTIC APPLIANCE ARRANGEMENT WITH COMMUNICATION MODULE, AND METHOD
SYSTÈME D'APPAREIL MÉNAGER AVEC MODULE DE COMMUNICATION, ET PROCÉDÉ

(30) Priorität: 21.08.2012 DE 102012214792
(43) Veröffentlichungstag der Anmeldung: 26.02.2014
(73) Patentinhaber: BSH Hausgeräte GmbH, 81739 München (DE)
(72) Erfinder: Gaugler, Johannes, 93073 Neutraubling (DE); Kolbe, Andreas, 12683 Berlin (DE); Leitl-Nobel, Martin, 86465 Welden (DE); Ranck, Sharon, 89407 Dillingen (DE); Sippel, Matthias, 83329 Waging am See (DE)

(56) Entgegenhaltungen:
- EP-A2- 2 323 447
- US-A1- 2011 277 023
- "Wi-Fi Protected Setup Specification Version 1.0h", , 31. Dezember 2006 (2006-12-31), Seiten 1-110, XP055031152, Internet Gefunden im Internet: URL:http://gpl.back2roots.org/source/puma5 /netgear/CG3200-1TDNDS_GPL/ap/apps/wpa2/or iginal/Wi-Fi Protected Setup Specification 1.0h.pdf [gefunden am 2012-06-26]

## Beschreibung

Die vorliegende Erfindung betrifft ein Kommunikationsmodul für ein Hausgerät und ein entsprechendes Hausgerät sowie entsprechende Verfahren hierfür.

Damit ein Hausgerät drahtlos Daten übermitteln kann, kann dieses an einem Kommunikationsmodul angemeldet werden, das eine Verbindung zu einem externen Kommunikationspartner herstellt. Die Anmeldung des Hausgerätes an dem Kommunikationsmodul erfolgt durch einen abgesicherten Prozess, der einen Verbindungsaufbau sicherstellt und Fremdeinwirkungsmöglichkeiten während des Anmeldeprozesses und im laufenden Betrieb verhindert. Allerdings werden bei dem Prozess der Anmeldung und des Herstellens einer drahtlosen Datenverbindung unterschiedliche Konfigurationsdaten abgefragt. Die Einrichtung einer drahtlosen Datenverbindung zwischen dem Hausgerät und dem Kommunikationsmodul ist daher für einen Benutzer kompliziert und fehleranfällig.

Aus der US 2011/0277023 A1 ist eine akustische Authentifizierung für eine Anmeldung an einem drahtlosen Netzwerk bekannt.

Die EP 2 323 477 A2 offenbart eine elektronische Vorrichtung sowie ein Netzwerkzugangsverfahren hierfür.

Es ist die der Erfindung zugrundeliegende Aufgabe, ein Kommunikationsmodul für ein Hausgerät und ein Hausgerät anzugeben, bei denen auf einfache Weise eine drahtlose Datenverbindung hergestellt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Das Kommunikationsmodul kann beispielsweise ein Router, ein Switch oder ein Computer sein. Dadurch wird beispielsweise der technische Vorteil erreicht, dass eine drahtlose Datenverbindung auf einfache Weise an dem Kommunikationsmodul durch einen Benutzer hergestellt werden kann.

Unter einem Hausgerät wird ein Gerät verstanden, das zur Haushaltsführung eingesetzt wird. Derartige Geräte sind auch unter dem Begriff "Weiße Ware" bekannt. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat, eine Küchenmaschine oder ein Staubsauger.

Ausführungsbeispiele der Erfindung sind in der Zeichnung dargestellt und werden im Folgenden näher beschrieben.

Es zeigen:
- Fig. 1: eine schematische Ansicht einer Hausgeräteanordnung;
- Fig. 2: ein Blockdiagram eines Verfahrens zum Herstellen einer drahtlosen Datenverbindung; und
- Fig. 3: ein Blockdiagram eines weiteren Verfahrens zum Herstellen einer drahtlosen Datenverbindung.

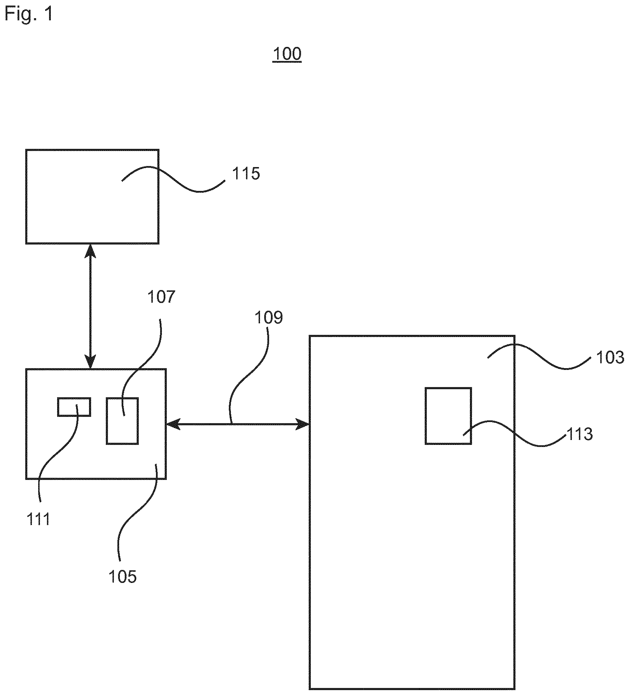

Fig. 1 zeigt eine schematische Ansicht einer Hausgeräteanordnung 100 mit den beteiligten Kommunikationspartnern. In der Hausgeräteanordnung 100 wird eine drahtlose Datenverbindung 109 zwischen einem Hausgerät 103 und einem externen Kommunikationspartner 115 durch ein Kommunikationsmodul 105 über mindestens zwei unterschiedliche Möglichkeiten aufgebaut.

Sowohl das Hausgerät 103 als auch das Kommunikationsmodul 105 umfassen jeweils eine drahtlose Datenschnittstelle für eine drahtlose Datenverbindung 109, die mit der jeweils anderen Datenschnittstelle kommunizieren kann. Bei der Datenschnittstelle kann es sich beispielsweise um eine WLAN- oder Wi-Fi-Schnittstelle handeln.

Der Anmeldeprozess für die drahtlose Datenverbindung 109 kann in einer ersten Möglichkeit entweder an dem Hausgerät 103 oder in einer zweiten Möglichkeit an dem Kommunikationsmodul 105 initiiert werden.

Beim Initiieren des Anmeldeprozesses an dem Hausgerät 103 kann die Datenverbindung 109 durch manuelles Betätigen einer Taste an dem Hausgerät 103 gestartet werden. Das Betätigen der Taste an dem Hausgerät 103 liefert eine Initiierungsinformation zum Aufbauen der drahtlosen Datenverbindung 109 mit dem Kommunikationsmodul 105. Zu diesem Zweck wird die eingegebene Initiierungsinformation durch eine Übermittlungseinrichtung an das Kommunikationsmodul 105 übertragen. Beispielsweise kann das Herstellen der drahtlosen Datenverbindung 109 mittels einer WPS-Funktionalität durch manuelles Drücken eines Knopfes hergestellt werden (Push-Button-Methode). Die Initiierungsinformation kann im Allgemeinen auf unterschiedliche Weise eingegeben werden. Beispielsweise kann die Eingabeeinrichtung ein Eingabebutton, eine menügesteuerte Aktivierung, eine frei belegbare Taste (Softkey) oder eine fest belegte Taste (Hardkey) sein.

Nach der Übermittlung der Initiierungsinformation an das Kommunikationsmodul 105 wird die Initiierungsinformation durch manuelles Drücken eines Knopfes an dem Kommunikationsmodul 105 bestätigt und die drahtlose Datenverbindung 109 zwischen dem Hausgerät 103 und dem Kommunikationsmodul 105 aufgebaut, so dass ein Datenaustausch stattfinden kann.

Beim Initiieren des Anmeldprozesses an dem Kommunikationsmodul 105 hingegen wird der Anmeldeprozess durch Eingeben einer Identifikationsinformation in eine Eingabeeinrichtung 107 gestartet, die an dem Kommunikationsmodul 105 bereitgestellt ist. Dem Hausgerät 103 kann eine Identifikationsnummer zugeordnet sein, beispielsweise eine PIN oder eine Seriennummer. Diese Identifikationsnummer kann über die Eingabeeinrichtung 107 in das Kommunikationsmodul 105 eingegeben werden. Der Anmeldeprozess kann nach dem Eingeben beispielsweise mittels einer WPS-Funktionalität gestartet werden. Das Kommunikationsmodul 105 kann eine Anzeigeeinrichtung 111 umfassen, die die eingegebene Informationsinformation einem Benutzer anzeigt, beispielsweise ein Display oder eine Flüssigkristallanzeige.

Zum Starten des Anmeldeprozesses wird die Identifikationsnummer beispielsweise in eine Nummerneingabeeinrichtung an dem Kommunikationsmodul 105 eingegeben, um die drahtlose Datenverbindung 109 herzustellen. Das Kommunikationsmodul 105 umfasst eine Übermittlungseinrichtung zum Übermitteln der Identifikationsnummer zu dem Hausgerät 103.

Das Hausgerät 103 umfasst einen Speicher, in dem die Identifikationsnummer vorgespeichert ist. Nach der Übermittlung der Identifikationsnummer an das Hausgerät 103 werden die an dem Kommunikationsmodul 105 eingegebene Identifikationsnummer und die vorgespeicherte Identifikationsnummer verglichen. Zu diesem Zweck umfasst das Hausgerät 103 eine Vergleichseinrichtung zum Vergleichen der von dem Kommunikationsmodul 105 übermittelten Identifikationsnummer und der vorgespeicherten Identifikationsnummer.

Bei einem positiven Vergleich beider Identifikationsnummern, d.h. nach einer erfolgreichen Eingabe der Identifikationsnummer an dem Kommunikationsmodul 105, wird die drahtlose Datenverbindung 109 zwischen dem Hausgerät 103 und dem Kommunikationsmodul 105 hergestellt. Ein zusätzliches Bestätigen des Anmeldeprozesses am Hausgerät 103 kann über einen Eingabebutton, eine menügesteuerte Aktivierung, eine frei belegbare Taste (Softkey) oder eine fest belegte Taste (Hardkey) erfolgen, wobei diese lediglich als Beispiel angegeben Variante einer zusätzlichen Bestätigung nicht beansprucht wird.

Dadurch ist es möglich, das Hausgerät 103 und das Kommunikationsmodul 105 durch zwei unterschiedliche Vorgehensweisen miteinander zu verbinden, beispielsweise durch Verwenden von WPS-Methoden.

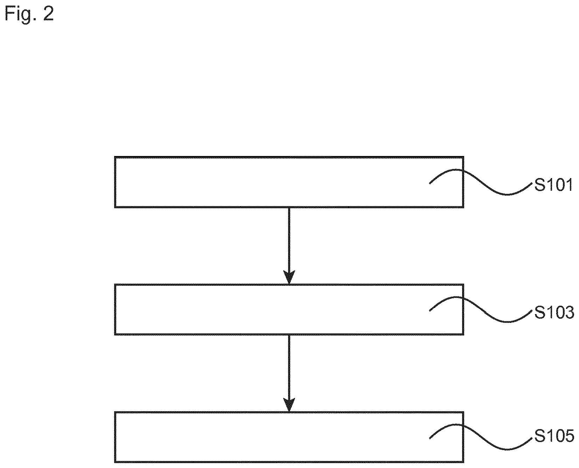

Fig. 2 zeigt ein Blockdiagram eines Verfahrens zum Herstellen einer drahtlosen Datenverbindung. Das Verfahren umfasst den Schritt S101 eines Eingebens einer Information zum Herstellen einer drahtlosen Datenverbindung 109 an dem Kommunikationsmodul 105. Beispielsweise wird die Information an dem Kommunikationsmodul 105 manuell eingegeben. Daraufhin wird in Schritt S103 die eingegebene Information von dem Kommunikationsmodul 105 an das Hausgerät 103 übermittelt. In Schritt S105 wird die übermittelte Information mit einer vorgespeicherten Information in dem Hausgerät 103 verglichen. Bei einem Übereinstimmen beider Informationen wird die drahtlose Datenverbindung 109 hergestellt.

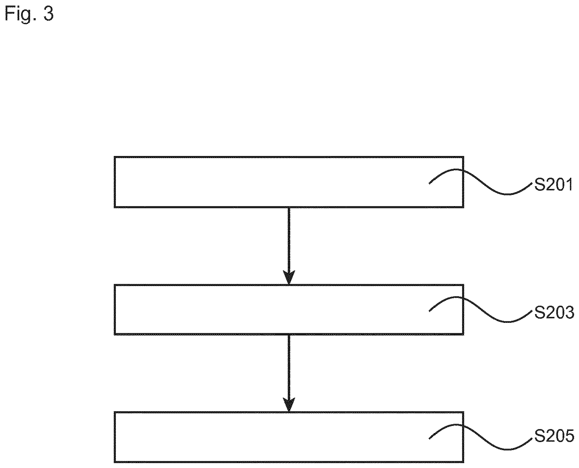

Fig. 3 zeigt ein Blockdiagram eines weiteren Verfahrens zum Herstellen einer drahtlosen Datenverbindung. Das Verfahren umfasst den Schritt S201 eines Eingebens einer Initiierungsinformation zum Herstellen einer drahtlosen Datenverbindung 109 an dem Hausgerät 103. Daraufhin wird in Schritt S203 die eingegebene Initiierungsinformation von dem Hausgerät 103 an das Kommunikationsmodul 105 übermittelt. In Schritt S205 wird die übermittelte Initiierungsinformation an dem Kommunikationsmodul 105 bestätigt und die drahtlose Datenverbindung hergestellt.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Hausgeräteanordnung
- 103: Hausgerät
- 105: Kommunikationsmodul
- 107: Eingabeeinrichtung
- 109: drahtlose Netzwerkverbindung
- 111: Anzeigeeinrichtung
- 113: Eingabeeinrichtung
- 115: externer Kommunikationspartner

## Patentansprüche

1. Hausgeräteanordnung (100) mit einem Hausgerät (103) und einem Kommunikationsmodul (105), wobei die Hausgeräteanordnung (100) ausgebildet ist, eine drahtlose Datenverbindung (109) zwischen dem Hausgerät (103) und einem externen Kommunikationspartner (115) durch das Kommunikationsmodul (105) über mindestens zwei unterschiedliche Möglichkeiten aufzubauen, zu welchem Zweck sowohl das Hausgerät (103) als auch das Kommunikationsmodul (105) jeweils eine drahtlose Datenschnittstelle umfassen, die ausgebildet ist, mit der jeweils anderen Datenschnittstelle zu kommunizieren, **dadurch gekennzeichnet, dass**
- das Kommunikationsmodul (105) eine erste Eingabeeinrichtung (107) zum Eingeben einer Information zum Herstellen einer ersten drahtlosen Datenverbindung zwischen dem Hausgerät (103) und dem Kommunikationsmodul (105) umfasst, wobei die erste Eingabeeinrichtung (107) eine Identifikationsinformationseingabeeinrichtung zum Eingeben durch einen Benutzer einer Identifikationsinformation als Information zum Herstellen der ersten drahtlosen Datenverbindung umfasst, und wobei das Kommunikationsmodul (105) eine Übermittlungseinrichtung zum Übermitteln der eingegebenen Information an das Hausgerät (103) zum Herstellen der ersten drahtlosen Datenverbindung, eine Empfangseinrichtung zum Empfangen einer Initiierungsinformation von dem Hausgerät (103) zum Herstellen einer zweiten drahtlosen Datenverbindung und eine Bestätigungseinrichtung zum manuellen Bestätigen der empfangenen Initiierungsinformation umfasst und
- das Hausgerät (103) eine zweite Eingabeeinrichtung (113) zum Eingeben einer Initiierungsinformation zum Herstellen der zweiten drahtlosen Datenverbindung zwischen dem Hausgerät (103) und dem Kommunikationsmodul (105) umfasst, wobei die zweite Eingabeeinrichtung (113) ein Eingabebutton, eine menügesteuerte Aktivierung, eine frei belegbare Taste oder eine fest belegte Taste ist, wobei das Hausgerät (103) eine Übermittlungseinrichtung zum Übermitteln der Initiierungsinformation an das Kommunikationsmodul (105) zum Herstellen der zweiten drahtlosen Datenverbindung umfasst, wobei das Hausgerät (103) eine Empfangsvorrichtung zum Empfangen einer Identifikationsinformation von dem Kommunikationsmodul (105) zum Herstellen der ersten drahtlosen Datenverbindung, einen nicht-flüchtigen Speicher mit einer vorgespeicherten Identifikationsinformation und eine Vergleichseinrichtung zum Vergleichen der von dem Kommunikationsmodul (105) übermittelten Identifikationsinformation und der vorgespeicherten Identifikationsinformation umfasst, und ausgestaltet ist, bei einem positiven Vergleich beider Identifikationsnummern ohne weitere Benutzereingabe die erste drahtlose Datenverbindung herzustellen,
wobei das Hausgerät und das Kommunikationsmodul ausgestaltet sind, wahlweise entweder die erste oder die zweite drahtlose Datenverbindung herzustellen, um die drahtlose Datenverbindung (109) zwischen dem Hausgerät (103) und dem externen Kommunikationspartner (115) durch das Kommunikationsmodul (105) aufzubauen.

2. Hausgeräteanordnung (100) nach Anspruch 1, **dadurch gekennzeichnet, dass** die erste Eingabeeinrichtung (107) des Kommunikationsmoduls (105) eine Anzeigeeinrichtung (111) zum Anzeigen der eingegebenen Identifikationsinformation umfasst.

3. Verfahren zum Betreiben einer Hausgeräteanordnung (100) mit einem Hausgerät (103) und einem Kommunikationsmodul (105), wobei in der Hausgeräteanordnung (100) eine drahtlose Datenverbindung (109) zwischen dem Hausgerät (103) und einem externen Kommunikationspartner (115) durch das Kommunikationsmodul (105) über mindestens zwei unterschiedliche Möglichkeiten aufgebaut wird, zu welchem Zweck sowohl das Hausgerät (103) als auch das Kommunikationsmodul (105) jeweils eine drahtlose Datenschnittstelle für die drahtlose Datenverbindung (109) umfassen, die ausgebildet ist, mit der jeweils anderen Datenschnittstelle zu kommunizieren, **dadurch gekennzeichnet, dass** wahlweise entweder
- bei einem Initiieren des Anmeldeprozesses an dem Hausgerät (103) der Anmeldeprozess durch manuelles Betätigen einer Taste an dem Hausgerät (103) gestartet wird, wobei das Betätigen der Taste an dem Hausgerät (103) eine Initiierungsinformation zum Herstellen einer ersten drahtlosen Datenverbindung mit dem Kommunikationsmodul (105) liefert, wobei die eingegebene Initiierungsinformation durch eine Übermittlungseinrichtung an das Kommunikationsmodul (105) übertragen wird, wobei nach der Übermittlung der Initiierungsinformation an das Kommunikationsmodul (105) die Initiierungsinformation durch manuelles Drücken eines Knopfes an dem Kommunikationsmodul 105 bestätigt und die erste drahtlose Datenverbindung zwischen dem Hausgerät (103) und dem Kommunikationsmodul (105) hergestellt wird, oder
- bei einem Initiieren des Anmeldeprozesses an dem Kommunikationsmodul (105) der Anmeldeprozess durch Eingeben einer Identifikationsinformation in eine Eingabeeinrichtung (107) gestartet wird, die an dem Kommunikationsmodul (105) bereitgestellt ist, wobei dem Hausgerät (103) eine Identifikationsnummer zugeordnet ist, wobei diese Identifikationsnummer über die Eingabeeinrichtung (107) in das Kommunikationsmodul (105) durch einen Benutzer eingegeben wird, wobei die eingegebene Identifikationsinformation dem Benutzer mittels einer Anzeigeeinrichtung (111) des Kommunikationsmoduls (105) anzeigt wird, wobei die Identifikationsnummer mittels einer Übermittlungseinrichtung des Kommunikationsmoduls (105) zum Übermitteln der Identifikationsnummer zu dem Hausgerät (103) übermittelt wird, wobei nach der Übermittlung der Identifikationsnummer an das Hausgerät (103) die an dem Kommunikationsmodul (105) eingegebene Identifikationsnummer und eine in einem Speicher des Hausgeräts (103) vorgespeicherte Identifikationsnummer mittels einer Vergleichseinrichtung des Hausgeräts (103) zum Vergleichen der von dem Kommunikationsmodul (105) übermittelten Identifikationsnummer und der vorgespeicherten Identifikationsnummer verglichen werden, wobei bei einem positiven Vergleich beider Identifikationsnummern ohne weitere Benutzereingabe eine zweite drahtlose Datenverbindung zwischen dem Hausgerät (103) und dem Kommunikationsmodul (105) hergestellt wird, wobei vermittels des Herstellens der ersten beziehungsweise der zweiten drahtlosen Datenverbindung die drahtlose Datenverbindung (109) zwischen dem Hausgerät (103) und einem externen Kommunikationspartner (115) aufgebaut wird.

## Claims

1. Household appliance arrangement (100) with a household appliance (103) and a communication module (105), wherein the household appliance arrangement (100) is embodied to set up a wireless data connection (109) between the household appliance (103) and an external communication partner (115) by way of the communication module (105) via at least two different possibilities, for which purpose both the household appliance (103) and the communication module (105) each comprise a wireless data interface, which is embodied to communicate with the other data interface in each case, **characterised in that**
- the communication module (105) comprises a first input facility (107) for inputting an item of information to establish a first wireless data connection between the household appliance (103) and the communication module (105), wherein the first input facility (107) comprises an identification information input facility for the inputting, by way of a user, of an item of identification information as information for establishing the first wireless data connection, and wherein the communication module (105) comprises a transmission facility for transmitting the input information to the household appliance (103) to establish the first wireless data connection, a receiving facility for receiving an item of initiation information from the household appliance (103) to establish a second wireless data connection and a confirmation facility for manually confirming the received initiation information, and
- the household appliance (103) comprises a second input facility (113) for inputting an item of initiation information to establish the second wireless data connection between the household appliance (103) and the communication module (105), wherein the second input facility (113) is an input button, a menu-controlled activation, a freely allocatable button or a permanently allocated button, wherein the household appliance (103) comprises a transmission facility for transmitting the initiation information to the communication module (105) to establish the second wireless data connection, wherein the household appliance (103) comprises a receiving facility for receiving an item of identification information from the communication module (105) to establish the first wireless data connection, a non-volatile memory with a prestored item of identification information and a comparison facility for comparing the identification information transmitted by the communication module (105) and the prestored identification information, and is embodied, in the case of a positive comparison of both identification numbers, to establish the first wireless data connection without further user input,
wherein the household appliance and the communication module are embodied to optionally establish either the first or the second wireless data connection, in order to set up the wireless data connection (109) between the household appliance (103) and the external communication partner (115) by way of the communication module (105).

2. Household appliance arrangement (100) according to claim 1, **characterised in that** the first input facility (107) of the communication module (105) comprises a display facility (111) for displaying the input identification information.

3. Method for operating a household appliance arrangement (100) with a household appliance (103) and a communication module (105), wherein, in the household appliance arrangement (100), a wireless data connection (109) is set up between the household appliance (103) and an external communication partner (115) by way of the communication module (105) via at least two different possibilities, for which purpose both the household appliance (103) and the communication module (105) each comprise a wireless data interface for the wireless data connection (109), which is embodied to communicate with the other data interface in each case, **characterised in that** optionally either
- when the application process is initiated on the household appliance (103), the application process is started by manually activating a button on the household appliance (103), wherein the activation of the button on the household appliance (103) delivers an item of initiation information to establish a first wireless data connection with the communication module (105), wherein the input initiation information is transferred to the communication module (105) by a transmission facility, wherein, after the transmission of the initiation information to the communication module (105), the initiation information is confirmed by manually pressing a button on the communication module 105 and the first wireless data connection is established between the household appliance (103) and the communication module (105), or
- when the application process is initiated on the communication module (105), the application process is started by inputting an item of identification information into an input facility (107), which is provided on the communication module (105), wherein the household appliance (103) is allocated an identification number, wherein this identification number is input into the communication module (105) by a user via the input facility (107), wherein the input identification information is displayed to the user by means of a display facility (111) of the communication module (105), wherein the identification number is transmitted by means of a transmission facility of the communication module (105) for transmitting the identification number to the household appliance (103), wherein after transmitting the identification number to the household appliance (103), the identification number input at the communication module (105) and an identification number prestored in a memory of the household appliance (103) are compared by means of a comparison facility of the household appliance (103) to compare the identification number transmitted by the communication module (105) and the prestored identification number, wherein, in the case of a positive comparison of both identification numbers, a second wireless data connection is established between the household appliance (103) and the communication module (105) without further user input,
wherein through establishing the first or the second wireless data connection, the wireless data connection (109) is set up between the household appliance (103) and an external communication partner (115).

## Revendications

1. Agencement d'appareil ménager (100) comprenant un appareil ménager (103) et un module de communication (105), dans lequel l'agencement d'appareil ménager (100) est réalisé pour établir une liaison de données (109) sans fil entre l'appareil ménager (103) et un partenaire de communication (115) externe au moyen du module de communication (105) par l'intermédiaire d'au moins deux possibilités différentes, dans le but de laquelle aussi bien l'appareil ménager (103) que le module de communication (105) comprennent respectivement une interface de données sans fil, laquelle est réalisée pour communiquer avec l'autre interface de données respective, **caractérisé en ce que**
- le module de communication (105) comprend un premier dispositif d'entrée (107) destiné à entrer une information dans le but d'établir une première liaison de données sans fil entre l'appareil ménager (103) et le module de communication (105), dans lequel le premier dispositif d'entrée (107) comprend un dispositif d'entrée d'information d'identification pour l'entrée par un utilisateur d'une information d'identification en tant qu'information pour l'établissement de la première liaison de données sans fil, et dans lequel le module de communication (105) comprend un dispositif de transmission pour la transmission de l'information entrée à l'appareil ménager (103) dans le but d'établir la première liaison de données sans fil,
un dispositif de réception pour la réception d'une information de lancement de l'appareil ménager (103) dans le but d'établir une deuxième liaison de données sans fil, et un dispositif de confirmation pour la confirmation manuelle de l'information de lancement reçue, et
- **en ce que** l'appareil ménager (103) comprend un deuxième dispositif d'entrée (113) pour l'entrée d'une information de lancement dans le but d'établir la deuxième liaison de données sans fil entre l'appareil ménager (103) et le module de communication (105), dans lequel le deuxième dispositif d'entrée (113) est une touche d'entrée, une activation commandée par menus, une touche librement programmable ou une touche à affectation définie, dans lequel l'appareil ménager (103) comprend un dispositif de transmission pour la transmission de l'information de lancement au module de communication (105) dans le but d'établir la deuxième liaison de données sans fil, dans lequel l'appareil ménager (103) comprend un dispositif de réception destiné à recevoir une information d'identification du module de communication (105) dans le but d'établir la première liaison de données sans fil, une mémoire non volatile comprenant une information d'identification mémorisée au préalable, et un dispositif de comparaison pour la comparaison de l'information d'identification transmise par le module de communication (105) et l'information d'identification mémorisée au préalable, et est réalisé pour établir la première liaison de données sans fil lors d'une comparaison positive des deux numéros d'identification sans entrée supplémentaire de l'utilisateur,
dans lequel l'appareil ménager et le module de communication sont conçus pour établir sélectivement soit la première soit la deuxième liaison de données sans fil afin d'établir la liaison de données (109) sans fil entre l'appareil ménager (103) et le partenaire de communication (115) externe au moyen du module de communication (105).

2. Agencement d'appareil ménager (100) selon la revendication 1, **caractérisé en ce que** le premier dispositif d'entrée (107) du module de communication (105) comprend un dispositif de visualisation (111) destiné à afficher l'information d'identification entrée.

3. Procédé de fonctionnement d'un agencement d'appareil ménager (100) comprenant un appareil ménager (103) et un module de communication (105), dans lequel, dans l'agencement d'appareil ménager (100), une liaison de données (109) sans fil est établie entre l'appareil ménager (103) et un partenaire de communication (115) externe au moyen du module de communication (105) par l'intermédiaire d'au moins deux possibilités différentes, dans le but de laquelle aussi bien l'appareil ménager (103) que le module de communication (105) comprennent respectivement une interface de données sans fil pour la liaison de données (109) sans fil, laquelle est réalisée pour communiquer avec l'autre interface de données respective, **caractérisé en ce que** sélectivement, soit
- lors d'un démarrage du processus d'enregistrement sur l'appareil ménager (103), le processus d'enregistrement est démarré par actionnement manuel d'une touche sur l'appareil ménager (103), dans lequel l'actionnement de la touche sur l'appareil ménager (103) fournit une information de lancement pour l'établissement d'une première liaison de données sans fil avec le module de communication (105), dans lequel l'information de lancement entrée est transmise au module de communication (105) au moyen d'un dispositif de transmission, dans lequel, après la transmission de l'information de lancement au module de communication (105), l'information de lancement est confirmée par pression manuelle d'un bouton sur le module de communication (105) et la première liaison de données sans fil est établie entre l'appareil ménager (103) et le module de communication (105), soit
- lors d'un démarrage du processus d'enregistrement au module de communication (105), le processus d'enregistrement est démarré en entrant une information d'identification dans un dispositif d'entrée (107) qui est fourni sur le module de communication (105), dans lequel un numéro d'identification est attribué à l'appareil ménager (103), dans lequel ce numéro d'identification est entré par un utilisateur dans le module de communication (105) par l'intermédiaire du dispositif d'entrée (107), dans lequel l'information d'identification entrée est affichée à l'utilisateur au moyen d'un dispositif de visualisation (111) du module de communication (105), dans lequel le numéro d'identification est transmis au moyen d'un dispositif de transmission du module de communication (105) dans le but de transmettre le numéro d'identification à l'appareil ménager (103), dans lequel, après la transmission du numéro d'identification à l'appareil ménager (103), le numéro d'identification entré sur le module de communication (105) et un numéro d'identification mémorisé au préalable dans une mémoire de l'appareil ménager (103) sont comparés au moyen d'un dispositif de comparaison de l'appareil ménager (103) dans le but de comparer le numéro d'identification transmis par le module de communication (105) et le numéro d'identification mémorisé au préalable, dans lequel, lors d'une comparaison positive des deux numéros d'identification sans entrée supplémentaire de l'utilisateur, une deuxième liaison de données sans fil est établie entre l'appareil ménager (103) et le module de communication (105),
dans lequel, au moyen de l'établissement de la première respectivement de la deuxième liaison de données sans fil, la liaison de données (109) sans fil est établie entre l'appareil ménager (103) et un partenaire de communication (115) externe.
